# EUROPEAN PATENT APPLICATION

(11) **EP 4 648 233 A1**
(43) Date of publication of application: **12.11.2025**
(21) Application number: 24174597.5
(22) Date of filing: 07.05.2024
(51) Int. Cl.: H01S 3/063, H01S 3/16

(54) **PHOTONIC INTEGRATED CIRCUIT AND METHOD FOR MANUFACTURING**

(71) Applicant: LiGenTec SA, 1024 Ecublens (CH)
(72) Inventor: Sacchetto, Davide, 1462 Yvonand, Vaud (CH); Mancinelli, Mattia, 2000 Neuchâtel (CH)
(74) Representative: Isarpatent

(57) **Abstract**

The present invention provides a method for manufacturing a photonic integrated circuit, comprising providing a waveguide structure including a core layer having a first refractive index and a first heat conductivity, the core layer arranged between a first cladding layer and a second cladding layer, the first and second cladding layers having a second refractive index lower than the first refractive index and a second heat conductivity lower than the first heat conductivity; etching locally at least part of the second cladding layer so that a region of the removed cladding layer forms a cavity, implanting rare earth elements into at least one of the core layer, the first cladding layer and the second cladding layer trough the cavity, and annealing the at least one of rare earth doped core layer the first cladding layer and second cladding layer with a first temperature, wherein annealing is performed by a laser beam irradiated into the cavity. Further the present invention provides a photonic integrated circuit and an alternative method for manufacturing a photonic integrated circuit.

## Description

### TECHNICAL FIELD OF THE INVENTION

The invention relates to a photonic integrated circuit as well as to a method for manufacturing a corresponding photonic integrated circuit.

### TECHNICAL BACKGROUND

Amplifiers and other optically active devices can be integrated into photonic integrated circuits. It is important to provide devices having low optical losses at relevant pump and signal wavelengths, such as the O-band at about 1310 nm and the C-band at about 1540 nm and corresponding pump wavelengths. In particular, losses in layers doped with rare earth elements as the active layers are critical since these may carry a high optical power density. Therefore, high-quality components and materials are required for these layers. The mode size of the optical signal in the waveguide needs to be controlled to limit the power density for achieving higher output powers. Furthermore, the photonic integrated circuit may have to be compatible with a back-end of line structure for which only limited temperatures can be applied during the manufacturing process.

US 9,325,140 B2 described integrated erbium-doped waveguide laser for silicon photonic system.

### SUMMARY OF THE INVENTION

Against this background, it is an objective of the present invention to provide an improved active waveguide.

According to the invention, this objective is solved in each case by the subject matters of the independent claims.

According to a first aspect of the invention, a method for manufacturing a photonic integrated circuit is provided. The method for manufacturing a photonic integrated circuit comprises providing a waveguide structure including a core layer having a first refractive index and a first heat conductivity, the core layer arranged between a first cladding layer and a second cladding layer, the first and second cladding layers having a second refractive index lower than the first refractive index and a second heat conductivity lower than the first heat conductivity; etching locally at least part of the second cladding layer so that a region of the removed cladding layer forms a cavity, implanting rare earth elements into at least one of the core layer, the first cladding layer and the second cladding layer trough the cavity, and annealing the at least one of rare earth doped core layer, the first cladding layer and second cladding layer with a first temperature wherein annealing is performed by a laser beam irradiated into the cavity.

According to a second aspect of the invention, a photonic integrated circuit is provided. The photonic integrated circuit comprises a first cladding layer, a first core layer arranged on the first cladding layer, a second cladding layer arranged on the first core layer having a first thickness, a second core layer arranged on the second cladding layer, and a third cladding layer arranged on the second core layer, wherein the first and second core layers have a first refractive index and a first heat conductivity, wherein each of the first, second and third cladding layers have a second refractive index lower than the first refractive index and a second heat conductivity lower than the first heat conductivity, wherein at least one of the first core layer, the second cladding layer and the second core layer is doped with rare earth elements, wherein at least one of the first core layer and the second core layer has a predetermined width, wherein a ratio of the predetermined width and the first thickness is determined for efficient mode coupling between the first core layer or the second core layer.

According to a third aspect of the invention, an alternative method for manufacturing a photonic integrated circuit is provided. The method for manufacturing photonic integrated circuit comprises providing a core layer comprising a first material and having a first refractive index and a first heat conductivity, the core layer arranged on a first cladding layer having a second material and having a second refractive index lower than the first refractive index and a second heat conductivity lower than the first heat conductivity, implanting rare earth elements into at least one of the core layer, and the first cladding layer, annealing the at least one of doped core layer and doped first cladding layer with a temperature between about 600°C and 1000°C, and bonding the core layer to a second cladding layer having the second refractive index and the second heat conductivity, wherein the bonding of the core layer to the second cladding layer is performed by a die-to-wafer bonding or a wafer-to-wafer bonding.

A fundamental idea of the present invention is to provide a manufacturing method and a corresponding waveguide structure that involves a localized annealing step of the rare earth doped material ensuring that the annealing can be made in a back-end of line, BEoL, process. The BEoL process in photonic circuits includes materials that typically cannot withstand temperatures greater 400°C. These materials typically are on the upper part of the stack of layers forming the photonic integrated circuit, typically above the second core and embedded or on top of the second cladding layer, i.e. on the top of the stack of layers. By opening a cavity in the second cladding layer, and by annealing locally only in this region, the BeOL material is prevented for being still present in other parts of the photonic circuit. Thus, this prevents irreversibly damage by melting.

A fundamental concept of the invention is to determine using a cladding material that has a rather small heat conductivity. In this way, heat will take longer time to dissipate, allowing core and cladding surrounding the core to locally restructure and, at the same time, prevent heat to cause dramatic temperature increase (e.g. above 400 degree Celsius) in sensitive parts of the device. In particular, electric components attached to the photonic integrated circuit in a back-end of line process, i.e. during the final step of manufacturing, are not compromised by this local annealing step conducted by irradiating the laser beam into the locally opened cavity. The laser may be a nanosecond pulsed laser beam. Typically, a distance of only 50 µm is enough to protect these components from the heat applied by the annealing. Shorter distances lower than 50 um are also possible by including trenches formed in the cladding area to futher reduce the lateral heat transfer from the annealed area to the back-end-of-the-line BEoL regions, where such sensortoy parts are located.

Several methods are proposed for manufacturing the described photonic integrated circuits. Thus, the present invention also provides a photonics integrated device manufactured by any of the described methods.

The ratio of the predetermined width of the core layer and the first thickness of the second cladding layer, which is a intermediate cladding layer, is determined for efficient mode coupling between the first core layer or the second core layer. This means that the ratio is selected according to the required location of the optical mode propagating in the waveguide structure of the first and second core layers and the first to third cladding layers. For example, a small ratio leads to a decrease of the interaction so that the mode is confined in the second, unetched, core layer, which may have a larger or even much larger lateral extent. A large ratio, i.e. a large predetermined width of the second core layer and/or a large first thickness of the intermediate cladding layer, enhances a mode transfer from the second core layer to the first core layer, so that the optical mode will mainly be located in the first core layer. The present structure thus enables efficient interaction, i.e. coupling and transfer between the first and second core layers, of whom one is providing gain to an optical signal propagating throught the photonic integrated circuit.

An optical mode confined partly in the first core layer and the second core layer also extends over the second cladding layer. Such an optical mode is thus be defined as a hybrid optical mode in this application.

Another implementation covered by the present invention involves the case in which the rare elements are embedded in the intermediate (cladding) layer located between the first core layer and the second core layer. The intermediate layer has a refractive index condition lower than the core layer. Suitable hosts for the intermedidate layer are similar to the cladding layers having a low heat conductivity and may be SiO2, Phosphorous doped glass PSG, Silicon oxynitride SiON or Al2O3, as will be diescussed further below. This means that cladding layers may also be doped with rare earth elements. For instance, a waveguide having a slot configuration with a doped layer can be designed such that most of the rare earth elements are embedded inside an intermediate cladding layer.

It is understood that for the implantation or doping of the rare earth elements, every single kind of or combination of rare earth elements can be applied. This includes for example Er Erbium, Yb Ytterbium, Tm Thulium, Nd Neodymium, Tb Terbium, Y Yttrium, Ce Cerium, Sc Scandium, Ho Holmium, Dy Dysprosium, La Lanthanum, Gd Gadolinium, Lu Lutetium, Sm Samarium, Pr Praseodymium. In the photonic integrated circuit, an optical pump mode can be absorbed inside the rare earth doped core layer to amplify a signal's photons according to one of the particular decay methods for the dispersed rare earth elements.

Advantageous embodiments and improvements of the present invention are found in the subordinate claims.

According to some further aspects according to the invention, etching comprises etching locally the second cladding layer so that a region of the removed cladding layer forms a cavity, in which the core layer is exposed. In this way, doping the core layer can be performed easily. In further embodiments,etching comprises etching at least a portion of the core layer to form a doped waveguide core of a predetermined width. By the laser annealing of the doped core layer, doping is performed only where needed, doping is performed only where it is required. This includes the doped core layer but may also include the surrounding first and second cladding layers that may also be partly doped in the following doping step. The application of the laeser beam to the doped core layer enables lower temperature applicable to the doped core layer. As a consequence, excess losses that would transfer a mode to a different layer can be reduzed or avoided. Furthermore, since the laser annealing provides heat only at a localized area, and the cladding material has a low heat conductance, heat dissipation into the cladding layers can be limited so that this method is particularly applicable as a back-end of line structure.

According to some further aspects according to the invention, annealing comprises adding an absorber layer comprising an absorber material into the cavity, irradiating the absorber layer by the laser beam having a wavelength absorptive in the absorber layer to obtain the first temperature. By this approach using heat conductance from the absorber layer into the core layer or the first and second cladding layers, the absorption of the laser can be enhanced and choice of the wavelength of the laser and the laser itself can be made independently from the material of e.g. the core layer.

According to some further aspects according to the invention, the absorber material of the absorption layer possesses substantial absorption in the ultraviolet spectral region, wherein the laser beam is a pulsed laser beam having a wavelength smaller than 300 nm, in particular about 193 nm or about 248 nm. Such lasers enable an efficient annealing process, typically using ns pulses. However, lasers emitting beams in the visible m, near-infrared or even far-infrared spectral range can also be used. The laser wavelengths for laser annealing are chosen according to the absorption properties of the RE-doped layers, which can be a core layer or the intermediate cladding layer. In case of a thin silicon layer as absorption layer,such an excimer laser wavelength has high absorption. This absorbed energy is then relaxed in the material in form of heat and will produce a re-arrangement of the different elements and bonds between the elements present. By this, the rare earth elements and the layer's material will re-arrange themselves in a way to remove dangling bonds and/or any lossy molecular bonds produced during the implantation phase of the process, or at least healing most of the relevant optical materials).

According to some further aspects according to the invention, the absorber material comprises one of silicon and a metal. These materials provide a high absorption in the ultraviolet, visible spectral range and near infrared spectral range, rendering these particularly suitable for this application.

According to some further aspects according to the invention, a laser spot has a diameter of between 0.1 mm and 5 mm, preferably 2 mm to 3 mm. These values represent typical laser spot sizes that lead to an efficient and homogeneous heating of the core layer.

According to some further aspects according to the invention, a core material of the core layer is silicon nitride. The choice of silicon nitride, SiN, or Si3N4, as a core material for the waveguide structure is due to its refractive index contrast with respect to common cladding materials such as oxides, in particular, silicon oxide, SiO2 as well as its low absorption in the visible and infrared parts of the optical spectrum. Therefore implanting Er directly into Si3N4 makes rare earth doped amplifiers possible in the photonic integrated circuit. The deposited Silicon Nitride is typically an amorphous material. Upon annealing with the first temperature, it may partially transform into alpha phase hexagonal Si3N4 or beta phase hexagonal Si3N4 a mixed phase in which both alpha and beta phases are present. Although SiN is the preferred core material of each core layer due to its low propagation losses, the use of a different material as a core material is also possible, such as Al2O3, silicon oxynitride SiON, doped silica glass, lithium niobate LNOI, Ta2O5 tantalum pentoxide and others. Upon implantation, the Si3N4 microstructure is altered, leaving lattice defects that increase propagation losses and absorption. The annealing step allows to re-organize the Si3N4 lattice and to recover the propagation loss baseline of the core material before the implantation step.

According to some further aspects according to the invention, a cladding material of the first and second cladding layers is an oxide. In particular, the oxide is silicon oxide, SiO2. The low heat conductance of the oxide, in particular SiO2 is relevant for the laser annealing process. In this way, heat produced during the annealing is confined into the core layers, where it is needed. Therefore, this helps to implant defects such as rare earth doped elements into the core layers. Although SiO2 is a preferred material due to its low propagation losses, the cladding material can also be one of SiOxCy or SiOxNy or their hydrogenated counterparts SiOxCy:H or SiOxNy:H, Al2O3, Y2O3, Y3Al5O12, doped silica, such as Phosphorous doped SiO2, Boron doped SiO2 and variations thereof, or Soda lime silicate glass.

According to some further aspects according to the invention, the first temperature is between about 600°C and 1250°C, preferably about 1000°C.

According to some further aspects according to the invention, the method further comprises the step of providing the second cladding layer on the doped core layer within the cavity. In this way, the second cladding return onto the doped core layer, thereby forming a low-loss waveguide structure. Preferably, this step is performed by applying die-to-wafer bonding, which represents a particularly easy manufacturing step, making an efficient use of the substrate carrying the doped region of the core layer. Furthermore, this effect or advantage relates to the die-bonding process. Since the doped material is needed inside a cavity since it occupies a smaller area than the whole photonic integrated circuit. Using die-bonding allows to have a batch of substrates to be implanted with rare earth elements, annealed and the separated in small dies. The small dies can then be die-bonded inside the cavities formed as part of photonic integrated circuit on a separate substrate. In this way, one doped substrate can serve several photonic integrated circuit substrates, making efficient use of the doped material. This provides economically advantages due to the high cost of rare earth implantation.

According to some further aspects according to the invention, the method further comprises the step of providing a second core layer having the first refractive index and the first heat conductivity on the second cladding layer, and providing a third cladding layer having the second refractive index and the second heat conductivity on the second core layer. In this way, an additional core layer is provided close to the (first) core layer, thereby enabling mode interaction between the two core layers. In this way, the optical mode of a signal beam propagating in the waveguide can be arbitrarely enlarged and its intensity decreased by design, thereby reducing the probability of damaging the photonic integrated circuit during operation.

According to some further aspects according to the invention, the at least one of first core layer, first cladding layer and second cladding layer is doped with the rare earth element. The second core layer has a predetermined width. Furthermore, a second core thickness of the second core layer is larger than the first core thickness of the first core layer. In this embodiment as well, the non-doped first core layer is defined by the etching process such that a propagating mode can achieve a designed interaction with the second core layer. In a particular embodiments, the core thickness for the first, unetched, core is 200 nm and for the second, etched core layer is 350 nm. These thicknesses of the core layer are typical values for signal wavelengths in the optical O-band, which is around 1310nm wavelength, and the optical C-band, which is around 1540 nm wavelength. However different thickness values can be utilized for different wavelength ranges. In preferred embodiments, the core layer thickness maybe between 50 nm and 800 nm.ln further embodiments, the second core layer is doped with the rare earth element, and wherein the second core layer has a predetermined width and the second core thickness of the second core layer is larger than the first core thickness of the first core layer.

According to some further aspects according to the invention, the predetermined width is between 0.5 µm and 2 µm and wherein an effective cross-sectional area being the product of the second core thickness and the predetermined width is between 0.3 µm² to 5 µm². These values represent typical values for the predetermined width, the effective cross-sectional area of the first core layer and the resulting first thickness.

According to some further aspects according to the invention, the first core has a first predetermined width and the second core has a second predetermined width smaller than the first predetrmined with, wherein the second core layer is arranged above the second core layer. This is understood as the second core layer is arranged above the second core layer, so that the second core layer is enclosed by the first core layer in a projection of the vertical direction, which is perpendicular to the direction of the waveguide and a surface of the photonic integrated circuit. In some embodiments, the second predetermined width is larger than the first predetermined width. By this arrangement of the two core layers having different sizes, a misalignment tolerant design is realized to avoid polarization rotation. Such a polarization rotation would be caused in case, the first and second predetermined width are the same and a misalignment between the first and second core layers would be misaligned in a lateral direction perpendicular to the vertical direction and the direction of the waveguides.

According to some further aspects according to the invention, the method further comprises providing a second core layer having the first refractive index and the first heat conductivity on the second cladding layer, and providing a third cladding layer having the second refractive index and the second heat conductivity on the second core layer, etching locally the third cladding layer so that the region of the removed cladding layer forms the cavity, in which the second core layer is exposed, and etching at least a portion of the core layer to form a waveguide core of a predetermined width. In this embodiment, the width of the second, non-doped, core layer is defined by the etching process such that a propagating mode can achieve a designed interaction with the (first) core layer. By varying the predetermined width of the second core layer, it can be determined whether the propagating mode is confined mainly in the first core layer or the second core layer. The third cladding layer may then be disposited again into the opened core layers.

According to some further aspects according to the invention, further comprising providing a second core layer having the first refractive index and the first heat conductivity and having a predetermined width arranged on the second cladding layer, and providing a third cladding layer arranged on the second core layer having the second refractive index and the second heat conductivity. In this embodiment, the bonding of the core layer to the second cladding layer may be performed by a wafer-to-wafer bonding. A wafer-to-wafer bonding is the most streamlined process and involves less steps than in the die-to-wafer bonding steps described above, since it does not involve the locally etching, or the local opening, LOCA. In order to obtain the second core layer having the predetermined width, the third cladding layer may be opened by local etching or LOCA to etch a portion of the second core layer to form an undoped core waveguide, as described above.

The above embodiments and further developments can be combined with each other as desired, if appropriate. In particular, all features of the photonic integrated circuit are transferable to the method and the alternative method for manufacturing the photonic integrated circuit, and vice versa. Other possible aspects, further developments and implementations of the invention also include combinations of features of the invention described above or below with regard to the embodiment examples that are not explicitly mentioned. In particular, the skilled person will also add individual aspects as improvements or additions to the respective basic form of the present invention.

Advantageous embodiments and further developments emerge from the description with reference to the figures.

### BRIEF SUMMARY OF THE DRAWINGS

The present invention is explained more specifically below on the basis of the exemplary embodiments indicated in the schematic figures, in which:
- Fig. 1: shows a flow chart for a method for manufacturing a photonic integrated circuit according to an embodiment of the invention;
- Fig. 2: shows a flow chart for a method for manufacturing a photonic integrated circuit according to a further embodiment of the invention;
- Fig. 3a-3c: show a series of cross-sections of a photonic integrated circuit during manufacturing by a method of manufacturing according to an embodiment of the invention;
- Fig. 4a-4f: show a series of cross-sections of a photonic integrated circuit during manufacturing by a method of manufacturing according to a further embodiment of the invention;
- Fig. 5: shows a flow chart for an alternative method for manufacturing a photonic integrated circuit according to an embodiment of the invention;
- Fig. 6: shows a cross-section of a photonic integrated circuit according to an embodiment of the invention;
- Fig. 7: shows a cross-section of a photonic integrated circuit according to a further embodiment of the invention;
- Fig. 8: shows a cross-section of a photonic integrated circuit according to a further embodiment of the invention;
- Fig. 9: shows a cross-section of a photonic integrated circuit according to a further embodiment of the invention;
- Fig. 10: shows a cross-section of a photonic integrated circuit according to a further embodiment of the invention; and
- Fig. 11: shows a cross-section of a photonic integrated circuit according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

### DESCRIPTION OF EMBODIMENTS

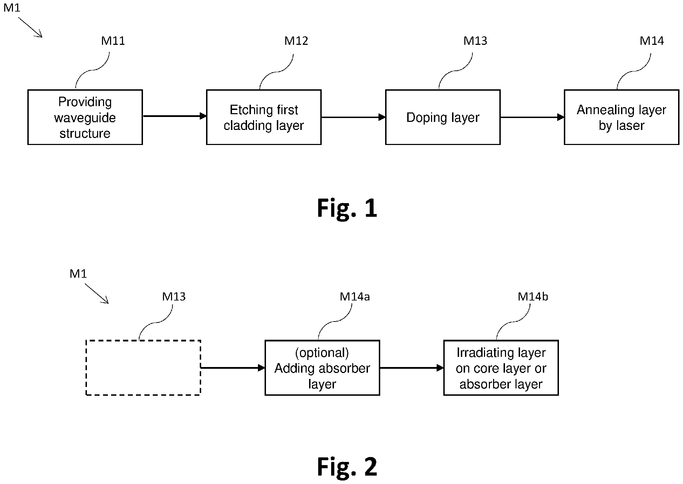

Fig. 1 shows a flow chart for a method for manufacturing a photonic integrated circuit according to an embodiment of the invention.

The method M1 for manufacturing a photonic integrated circuit 1 comprises 4 basic steps. In a first step, a waveguide structure including a core layer 2 having a first refractive index and a first heat conductivity is provided M11. The core layer 2 is arranged between a first cladding layer 3 and a second cladding layer 4. The first and second cladding layers 4 have a second refractive index lower than the first refractive index and a second heat conductivity lower than the first heat conductivity. In a second step, at least a part of the second cladding layer 4 is etched M12 locally so that a region of the removed cladding layer forms a cavity 11.

In some embodiments, etching M12 comprises etching M12 at least a portion of the core layer 2 to form a doped waveguide core of a predetermined width 14. Preferably in these embodiments, annealing M14 of the rare-earth doped core layer is performed by a laser beam 13.

In a third step, rare earth elements 12 into the core layer 2 are implanted M13 to provide at least one of a doped core layer 2, a doped first cladding layer 1 and a doped second cladding layer 4. The doping is performed by deposition trough the cavity 11.

In a fourth step, the at least one of rare earth doped core layer 2, first cladding layer 1 and a doped second cladding layer 4 is annealed M14 with a first temperature. The annealing M14 is performed by a laser beam 13 irradiated into the cavity 11. In some embodiments, the first temperature is between about 600°C and 1250°C. In preferred embodiments, the first temperature preferably is about 1000°C. Typically, annealing is performed over e.g. 60 minutes. In the annealing step, damages in the structure of the core layer that can be caused by the implantation of rare earth elements and its vicinity can be repaired. In a further embodiment, rare earth elements are implanted into the second cladding layer 4. In further embodiments, the doped second cladding layer 4 is annealed.

Fig. 2 shows a flow chart for a method for manufacturing a photonic integrated circuit 1 according to a further embodiment of the invention.

The embodiment of the method M1 shown in Fig. 2 is based on the method M1 of the embodiment shown in Fig. 1, in which the fourth step is conducted in two different steps M14a and M14b, of which step M14a is optional.

In this embodiment, the step of annealing M14 of the rare-earth doped core layer is conducted as follows. At first, an absorber layer 8 comprising an absorber material is added M14a onto the core layer 2. Then, the absorber layer 8 is irradiated M14 by the laser beam 13 having a wavelength absorptive in the absorber layer 8 to obtain the first temperature required for annealing. The laser is chosen for having a wavelength absorptive in the absorber layer. In some embodiments, the absorber material comprises silicon. In another embodiment, the absorber material of the absorber layer is a metal, such as copper, iron, aluminum, or an alloy. In one embodiment, the absorber material of the absorption layer possesses substantial absorption in the ultraviolet spectral region. In one embodiment, the laser beam 13 is a pulsed laser beam having a wavelength smaller than 300 nm, in particular about 193 nm or about 248 nm. In further embodiments, the laser has a wavelength in the visible spectral range, i.e. between 400 nm and about 700 nm. In further embodiments, the laser beam has a wavelength in the near-infrared spectral range, e.g. between 850 nm and 1100 nm, and is formed by ns pulses.

In further embodiments, step M14a is omitted and the laser is chosen to have a wavelength, which is absorptive in the material of the core layer.

Although not shown in Fig. 1 and 2, in some embodiments, the method M1 can be extended to comprise further steps. In some embodiments, after the annealing of the doped core layer 2, the second cladding layer 4 is provided again on the doped core layer 2 within the cavity 11. This can be performed e.g. by applying die-to-wafer bonding for depositing this and also further layers. Then, a second core layer 5 having the first refractive index and the first heat conductivity is provided, e.g. by deposition, on the second cladding layer 4. Finally, a third cladding layer 6 having the second refractive index and the second heat conductivity is provided on the second core layer 5.

As mentioned above, in some embodiments, during the etching M12 of the first cladding comprises at least a portion of the core layer 2 is etched M12 to form a doped waveguide core of a predetermined width 14. Having the second core layer 5 and the third cladding layer 6, an optical mode 16 propagating through the waveguide core formed by the (first) core layer 2 also interacts with the second core layer 5, depending on the predetermined width 14 of the core layer 2 and a thickness 4a of the second cladding layer 4, as will be described further below. In such embodiments, the second cladding layer 4 arranged between the (first) core layer 2 and the second core layer 5 forms an intermediate layer. In some embodiments, the cladding layers are formed by oxides as materials. In these embodiments, one of the first cladding layer 3 and the third cladding layer 6 forms an top-oxide layer, TOP, the other of the first cladding layer 3 and the third cladding layer 6 forms a bottom oxide layer, BOX, and the second cladding layer 4 forms the inter-layer oxide, ILO. In preferred embodiments, the first cladding layer 3 forms the TOP, and the third cladding layer 6 forms the BOX, which is formed on a substrate such as a Si-wafer (not shown). TOP and BOX layers are typically relatively thick compared to the second cladding layer 4, i.e. ILO, and the core layers 2, 5.

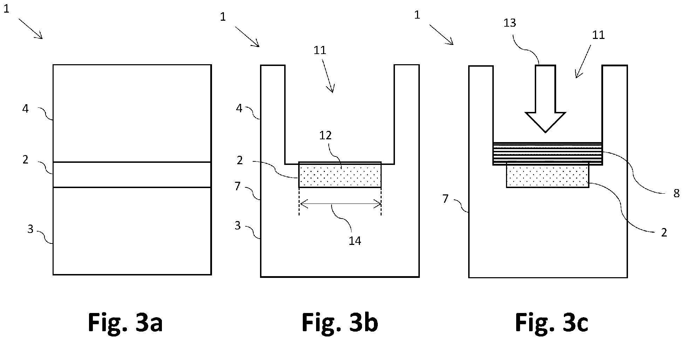

Fig. 3a to 3c show a series of cross-sections of a photonic integrated circuit 1 during manufacturing by a method of manufacturing according to an embodiment of the invention.

The series of cross-sections shown in Fig. 3 illustrates an embodiment of a method of manufacturing a photonic integrated circuit 1, which is based on and compatible with the method M1 as described with reference to Fig. 1 and 2.

In Fig. 3a waveguide structure is shown that include a first core layer 2 having a first refractive index and a first heat conductivity. The core layer 2 is arranged between a first cladding layer 3 and a second cladding layer 4. The first and second cladding layers 3, 4 have a second refractive index lower than the first refractive index and a second heat conductivity lower than the first heat conductivity.

In preferred embodiments, a core material of the core layer 2 is silicon nitride. The choice of silicon nitride, SiN, or Si3N4, as a core material for the waveguide structure is due to its refractive index contrast with respect to common cladding materials such as oxides, in particular, silicon oxide, SiO2. The deposited SiN is typically an amorphous material. Upon annealing with the first temperature, as described above, Si3N4 may transform into alpha phase hexagonal Si3N4 or beta phase hexagonal Si3N4 or gamma phase cubic Si3N4. Although SiN is the preferred core material of each core layer due to its low propagation losses, in further embodiments, different material as a core material is also possible, such as Al2O3, silicon oxynitride SiON, doped silica glass, lithium niobate LNOI, Ta2O5 tantalum pentoxide and others.

In some embodiments, a cladding material of the first and second cladding layers 3, 4 is an oxide. In preferred embodiments, a cladding material of the first and second cladding layers 3, 4 is silicon oxide, SiO2. Although SiO2 is a preferred material due to its low propagation losses, the cladding material can also be one of SiOxCy or SiOxNy or their hydrogenated counterparts SiOxCy:H or SiOxNy:H, Al2O3, Y2O3, Y3Al5O12, doped silica, such as Phosphorous doped SiO2, Boron doped SiO2 and variations thereof, or Soda lime silicate glass

In Fig. 3b, the first cladding layer 3 has been etched locally so that a region of the removed cladding layer forms a cavity 11, in which the core layer 2 is exposed. In this step, at least a portion of the core layer 2 has been etched to that adoped waveguide core of a predetermined width 14 is formed within a common cladding layer 7, which is formed by the first and second cladding layer 3 and 4, thereby surrounding the core layer 2 except the exposed region.

Furthermore, rare earth elements 12 have been implanted into the core layer 2, thus forming a rare earth doped core layer 2, which is applicable for an optical amplifier or even for a laser. The implanted rare earth elements may include for example Er Erbium, Yb Ytterbium, Tm Thulium, Nd Neodymium, Tb Terbium, Y Yttrium, Ce Cerium, Sc Scandium, Ho Holmium, Dy Dysprosium, La Lanthanum, Gd Gadolinium, Lu Lutetium, Sm Samarium, Pr Praseodymium, or combinations thereof in the form of co-dopings, depending on the application. Known techniques are applied for doping the core layer with the rare earth element.

Shown in Fig. 3c is an additional absorber layer 8 deposited on the doped core layer 2. In some embodiments, he absorber layer 8 is deposited into the cavity 11 at low temperatures by known PVD techniques. The absorber layer 8 comprises an absorber material. The absorber layer 8 is irradiated by the laser beam 13 having a wavelength absorptive in the absorber layer 8 to obtain the first temperature. This means that the absorber material of the absorption layer possesses substantial absorption at the wavelength of the laser beam. In some embodiments, The absorber material possesses absorption in the ultraviolet spectral region. In some of these embodiments, the laser beam 13 is a pulsed laser beam having a wavelength smaller than 300 nm, in particular about 193 nm or about 248 nm, preferably emitted by an excimer laser based on ArF for 193 nm and KrF for 248 nm wavelength. In some of these embodiments and further embodiments, the absorber material comprises one of silicon, thus the absorber layer is formed by depositing silicon on the doped core layer 2. In further embodiments, the absorber layer 8 is formed a metal.

By irradiating the absorber material, heat is generated in the absorber material. This heat transfers to the core layer 2, which has a higher heat conductivity than the surrounding common cladding layer 7. However, heat is also dissipating into the common cladding layer 7 for annealing at least the party of the common cladding layer 7 adjacent to the core layer 2. As a consequence, excess losses that would transfer a mode to a different layer can be reduced or avoided. Furthermore, since the laser annealing provides heat only at a localized area, and the cladding material has a low heat conductance, heat dissipation into the common cladding layer 7 can be controlled to not influence parts of the photonic integrated circuit 1 related to a back-end of line.

In some embodiments, the first temperature is between about 600°C and 1250°C. In preferred embodiments, the first temperature is about 1000°C. Using nanosecond pulsed lasers, the heat dissipates to a much less volume. Since the heat generated with laser annealing is basically dissipated over a few microns in distance, then an area can be limited to where a temperature > 600C is reached on the photonic integrated circuit 1. This allows to have Back-end-of-the-line in regions outside the cavity 11. Therefore, the application of the method for manufacturing the photonic integrated circuit 1 can be used in a back-end of line, thereby facilitating manufacturing of the photonic integrated circuit.

In some embodiments, a laser spot has a diameter of between 0.1 mm and 5 mm on the absorber layer 8 for performing the annealing with the laser. In preferred embodiments, the laser spot has a diameter between 2 mm to 3 mm. The profile of the laser spot can be Gaussian, flat-top round or even rectangular or of any other suitable shape and intensity distribution.

Since in the annealing process, such as conducted with a laser emitting nanosecond pulses, heat is produced very fast on top of an additional absorber layer or directly onto the RE-implanted Si3N4, it is challenging for the heat to dissipate outside the Si3N4, requiring longer thermal relaxation times. The SiO2 is favorable to the annealing itself for repairing implantation damage in the Si3N4 waveguide and its vicinity more at other parts of the device. Therefore if the heat produced by annealing relaxes longer time into Si3N4 it is beneficial for the implantation of defects into the core layer 2.

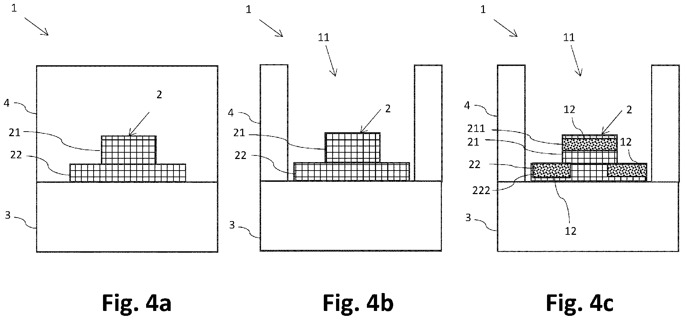

Fig. 4a-4f show a series of cross-sections of a photonic integrated circuit 1 during manufacturing by a method of manufacturing according to a further embodiment of the invention.

The shown manufacturing process is based on the process shown in the previous series of cross-sections in Fig. 3a to 3c. However, instead of a strip waveguide, a RIB configuration is applied in the present embodiment, in which the core layer 2 comprises an upper core layer 21 and a shallow core layer 22, whose thickness is less than a thickness of the upper core layer 21.

In Fig. 4a, the core layer 2 comprises the upper core layer 21 and the shallow core layer 22 are enclosed by a first cladding layer 3 and a second cladding layer 4, both having a lower refractive index and a lower heat conductivity as the core layer 21, as discussed above. In Fig. 4b, the local etching has been performed to form a cavity 11, in which the core layer 2 is exposed. At both lateral edges of the core layer 2, also a part of the first cladding layer 3 is exposed. Fig. 4c shows the core layer 2 after doping with rare earth elements 12. Within the upper core layer 21 and the shallow core layer 22, areas of doped upper part of core layer 211 of the upper core layer 21 and doped shallow core part 221 of the shallow layer 22 were formed. These areas are mostly below the exposed parts of core layer 2. A penetration depth of the doping can be controlled using commonly known techniques.

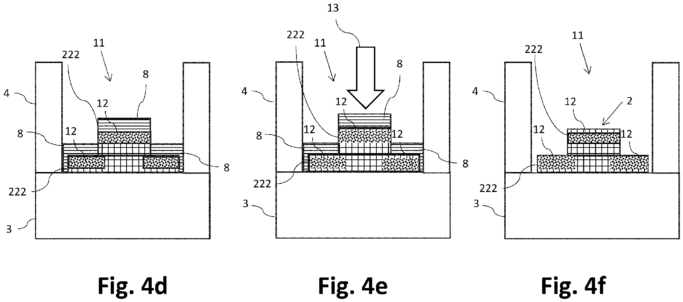

In Fig. 4d, an absorber layer 8 is deposited on the exposed doped core layer 2 and the exposed parts of the cladding layer 3. As discussed above, this step is generally optional and facilitates the absorption of the following laser irradiation, as discussed before. In Fig. 4e, a laser beam 13 is applied to the absorber layer 8 in the cavity 11 for annealing the core layer 2 including the doped upper and shallow parts 211, 221 with a temperature of about 1000°C. In some embodiments, part of the first cladding layer 3 adjacent to the core layer 2 is also annealed with about 1000°C.

In Fig. 4f, the absorber layer 8 is removed by etching. In some embodiments, the second layer 4 is returned to fill the cavity 8, so that the doped core 2 including the doped upper and shallow parts 211, 221 together with the first and second cladding layers 3, 4 form a waveguide in the photonic integrated circuit. In such a waveguide, a size of an optical mode can be controlled by the dimensions of the upper core layer 21 and the shallow core layer 22 by design.

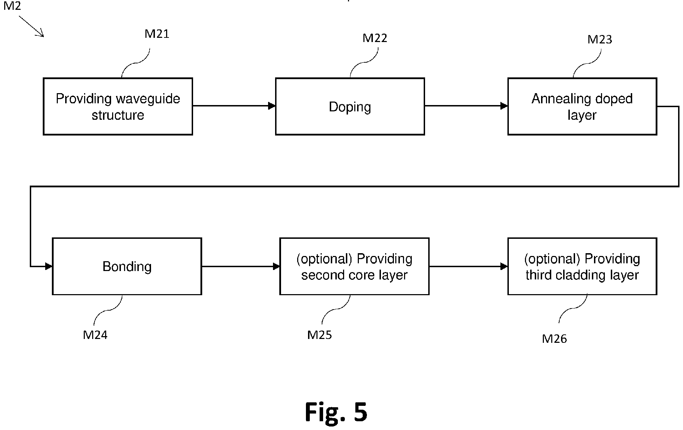

Fig. 5 shows a flow chart for an alternative method for manufacturing a photonic integrated circuit 1 according to an embodiment of the invention.

The alternative method M2 for manufacturing a photonic integrated circuit 1, comprises at least six step M21 to M26 of which the final two steps M25 and M26 are optional.

At first, a core layer 2 having a first refractive index and a first heat conductivity is provided. The core layer 2 is arranged on a first cladding layer 3 and has a second refractive index lower than the first refractive index and a second heat conductivity lower than the first heat conductivity.

In a further step, rare earth elements 12 are implanted M22 into at least one of the core layer 2, the first cladding layer.

Then, the at least one doped core layer 2 and doped first cladding layer 3 is annealed M23 with a temperature between about 600°C and 1250°C, preferably with a temperature of about 1000°C. In a further step, the core layer 2 is bonded M24 to a second cladding layer 4 having the second refractive index and the second heat conductivity. The bonding of the core layer 2 to the second cladding layer 4 can be performed by a die-to-wafer bonding or a wafer-to-wafer bonding.

In some of these embodiments, the bonding of the core layer 2 to the second cladding layer 4 is performed by a wafer-to-wafer bonding. A wafer-to-wafer bonding is the most streamlined process and involves less steps than in the die-to-wafer bonding steps described above, since it does not involve the locally etching, or the local opening, LOCA.

In some embodiments, the method further includes the following steps. A second core layer 5 having the first refractive index and the first heat conductivity and having a predetermined width 14 arranged is provided M25 on the second cladding layer 4. Furthermore, a third cladding layer 6 is provided on the second core layer 5, the third cladding layer 6 has the second refractive index and the second heat conductivity.

In alternative embodiments of the final steps M25 and M26 of the method M2, a second core layer 4 having the first refractive index and the first heat conductivity and having a predetermined width 14 is provided M25 on the second cladding layer 4. In order to obtain the second core layer having the predetermined width 14, the third cladding layer may be opened by local etching or LOCA to etch a portion of the second core layer to form an undoped core waveguide, as described above. Then, a third cladding layer 6 deposited on the second core layer 4 is provided M26. The third cladding layer 6 has the second refractive index and the second heat conductivity.

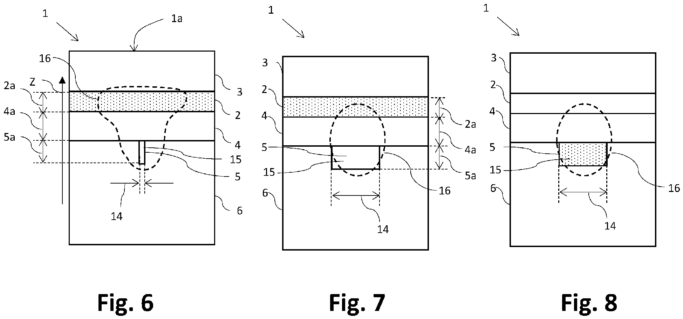

Fig. 6 to 11 show cross-sections of a photonic integrated circuit 1 according to some exemplary embodiments of the invention. It is understood that also further configurations of an photonic integrated circuit 1 are possible to realize using the technique as described above with reference to Fig. 1 to 4.

The photonic integrated circuits 1 shown in Fig. 6 to 11 can be manufactured by the method M1 as described above with reference to Fig. 1 and 2 or by the method M2, as described above with reference to Fig. 5.

The photonic integrated circuit 1 shown in Fig. 6 comprises a first cladding layer 3 and a first core layer 2 arranged on the first cladding layer 3. The first core layer 2 has a first core thickness 2a. A second cladding layer 4 is arranged on the first core layer 2 having a first thickness 4a. Furthermore, a second core layer 5 arranged on the second cladding layer 4. Finally, a third cladding layer 6 arranged on the second core layer 5. The core and cladding layers 2 to 6 are stacked in a vertical direction Z, which is perpendicular to a surface 1a of the photonic integrated circuit 1 and the waveguide structure. It is understood that a direction of the waveguide, in which signal light is propagating, is substantially perpendicular to the drawing plane of the figure.

The first and second core layers 2, 5 have a first refractive index and a first heat conductivity. As described already above with reference to Fig. 3, in preferred embodiments, a core material of the core layer 2 is silicon nitride. The choice of silicon nitride, SiN, or Si3N4, as a core material for the waveguide structure is due to its refractive index contrast with respect to common cladding materials such as oxides, in particular, silicon oxide, SiO2. The deposited SiN is typically an amorphous material. Upon annealing with the first temperature, as described above, Si3N4 may transform into alpha phase hexagonal Si3N4 or beta phase hexagonal Si3N4 or gamma phase cubic Si3N4. Although SiN is the preferred core material of each core layer due to its low propagation losses, in further embodiments, different material as a core material is also possible, such as Al2O3, silicon oxynitride SiON, doped silica glass, lithium niobate LNOI, Ta2O5 tantalum pentoxide and others.

Furthermore, the first, second and third cladding layers 3, 4, 6 have a second refractive index lower than the first refractive index and a second heat conductivity lower than the first heat conductivity. As described already above with reference to Fig. 3, in some embodiments, a cladding material of the first and second cladding layers 3, 4 is an oxide. In preferred embodiments, a cladding material of the first and second cladding layers 3, 4 is silicon oxide, SiO2. Although SiO2 is a preferred material due to its low propagation losses, the cladding material can also be one of SiOxCy or SiOxNy or their hydrogenated counterparts SiOxCy:H or SiOxNy:H, Al2O3, Y2O3, Y3Al5O12, doped silica, such as Phosphorous doped SiO2, Boron doped SiO2 and variations thereof, or Soda lime silicate glass.

In such embodiments, one of the first cladding layer 3 and the third cladding layer 6 forms an top-oxide layer, TOP, the other of the first cladding layer 3 and the third cladding layer 6 forms a bottom oxide layer, BOX, and the second cladding layer 4 forms the inter-layer oxide, ILO. In preferred embodiments, the first cladding layer 3 forms the TOP, and the third cladding layer 6 forms the BOX, which is formed on a substrate such as an Si-wafer (not shown). TOP and BOX layers are typically relatively thick compared to the second cladding layer 4, i.e. ILO, and the core layers 2, 5.

A layer thickness of the first and third cladding layers 3 and 6 is thick compared to the first and second core layers 2, 5 and the second cladding layer 4, which forms an intermediate layer or, in preferred embodiments, and ILO between the core layers 2, 5. In this embodiment, a first core thickness of the first core layer 2 is smaller than a second core thickness of the second core layer 5. In preferred embodiments, the first core thickness 2a is about 200 nm and the second core thickness 5a is about 350 nm. These core thicknesses can be adapted by a RIB-process. The first thickness 4a of the intermediate second cladding layer 4 is typically in the same order as the first and second core thicknesses 2a, 5a, depending on the application. Thus, in preferred embodiments, the first core thickness 2a is about 200 nm, and the second core thickness 5a is about 350 nm. In some embodiments, the predetermined width 14 is between 0.5 µm and 2 µm. The effective cross-sectional area 15 being a product of the second core thickness 5a and the predetermined width 14 is between 0.3 µm² to 5 µm².

In such embodiments of a photonic integrated circuit 1 as shown in Fig. 6 to 8, at least one of the first core layer 2 and the second core layer 5 is doped with rare earth elements 12 for the use as an integrated amplifier or laser. In the present embodiment, the first core layer 2 is doped with the rare earth elements 12.

In such embodiments of a photonic integrated circuit 1, at least one of the first core layer 2 and the second core layer 5 has a predetermined width 14. A ratio of the predetermined width 14 and the first thickness 4a of the second cladding layer 4 is determined for efficient mode coupling between the first core layer 2 or the second core layer 5. This means that the ratio is selected according to the required location of aan optical mode 16 propagating in the waveguide structure of the first and second core layers 2, 5 and the first to third cladding layers 3, 4, 6. In the present embodiment, due to the relatively small predetermined width 14, a small ratio is realized, which leads to a decrease of the interaction so that the mode is confined in the first, unetched, core layer 2, which has a very large lateral extend.

In the present embodiment, the second core layer 5 has a predetermined width 14, which is relatively small wherein a second core thickness 5a of the second core layer 5 is smaller than a first core thickness 2a of the first core layer 2.

Fig. 7 shows a cross-section of a photonic integrated circuit 1 according to a further embodiment of the invention.

In the embodiment of the photonic integrated circuit 1 shown in Fig. 7, the second core layer 5 has been etched locally such that a predetermined width 14 of the second core layer 14 is larger so that the ratio also is larger than in Fig. 6. Due to the enlarged predetermined width 14, an optical mode 16 is located mainly in the second core layer 5 instead of the first core layer 2 as shown in Fig. 6. In this way, by designing appropriate predetermined widths 14, controlling the propagation of the optical mode 16 in an integrated amplifier or an integrated laser may be achieved. Furthermore, compared to Fig. 4, the optical mode 16 is enlarged so that a power density or intensity of the optical mode can be reduced, thereby enabling larger output powers of the integrated amplifier or laser.

Fig. 8 shows a cross-section of a photonic integrated circuit 1 according to a further embodiment of the invention.

Compared to the embodiment of the photonic integrated circuit 1 shown in Fig. 7, in this embodiment the second core layer 2 is doped with rare earth elements 12. Although in the methods M1, M2 described above, the first core layer 2 has been doped with rare earth elements 12, it is understood that the above methods M1 and M2 can be applied for the structure of the photonic integrated circuit 1 as well, for example, by interchanging the first and second core layers 2, 5.

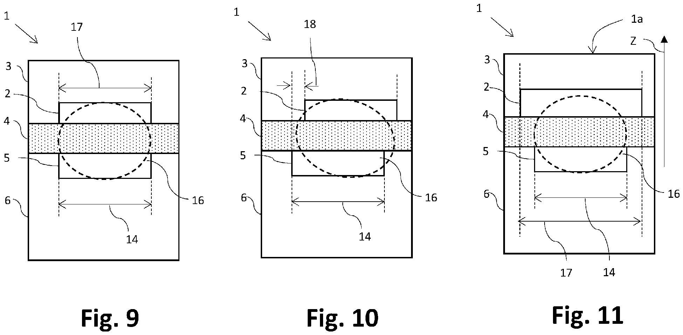

Fig. 9 shows a cross-section of a photonic integrated circuit 1 according to a further embodiment of the invention.

The previous embodiments of Fig. 6 to 8 presented the core layers 2 and 5 in "slot waveguide configuration", in which the rare-earth elements 12 are implanted in a dedicated host core layer. In the embodiments shown in Fig. 9 to 11, a modified "slot configuration" is realized in that the host for doping is the intermediate second cladding layer 4, which is made of Phosphorous Silica Glass. In further embodiments, the intermediate second cladding layer 4 comprises and maybe made of SiO2, Al2O3 or SiON. The rare earth elements 12 are Erbium, Er, in these embodiments.

By this configuration, the overlap of the optical mode 16 with the Er ions at the center of the waveguide structure is maximized. Furthermore, the first core layer 2 has a similar first predetermined width 17 as the (second) predetermined width 14 of the second core layer 5. The embodiment of Fig. 9 includes manufacturability challenges to precisely align the first and second core layers 2, 5 in the vertical direction. In case of

Fig. 10 shows a cross-section of a photonic integrated circuit according to a further embodiment of the invention.

Fig. 10 visualizes a lateral misalignment 18 between the first and second predetermined width 14, 17 on the optical mode 16. In case of such an existing misalignment 18, In case of such misalignment 18, the optical mode 16 exhibits a polarization rotation, which may be detrimental for the performance of the photonic integrated circuit 1, which is configured as amplifier. Therefore, such a misalignment should be avoided.

Fig. 11 shows a cross-section of a photonic integrated circuit according to a further embodiment of the invention.

Fig. 11 shows a misalignment tolerant design, in which one of the first and second predetermined widths 14, 17 of the two care layers 2, 5 is extended. In the present embodiment, the first core 2 has a first predetermined with 17 and the second core 5 has a second predetermined width 14 smaller than the first predetrmined with 17. The first predetermined width 17 of the first core layer 2 is thus larger than the second predetermined width 14 of the second core layer 5. In the present embodiment, the second core layer 2 is arranged above the second core alyer 5, so that the second core layer 5 is enclosed by the first core layer 2 in a projection of the vertical direction Z, which is perpendicular to the direction of the waveguide, i.e. a surface of the photonic integrated circuit. This ensures a good confinement of the optical mode 16 propagating along the waveguide and prevents polarization rotation of the optical mode 16 due to a possible misalignment 18, as discussed in the embodiment with reference to Fig. 10.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present inventions is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiments. In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### LIST OF USED REFERENCE SIGNS

- 1: photonic integrated circuit
- 1a: surfaceof the photonic integrated circuit
- 2: (first) core layer
- 2a: first core thickness
- 3: first cladding layer
- 4: intermediate second cladding layer
- 4: second cladding layer
- 4a: first thickness
- 5: second core layer
- 5a: second core thickness
- 6: third cladding layer
- 7: common cladding layer
- 8: absorber layer
- 8: absorber layer
- 11: cavity
- 12: rare earth element
- 13: laser beam
- 14: (second) predetermined width
- 15: effective cross-sectional area
- 16: optical mode
- 17: first predetermined width
- 18: misalignment
- 21: upper part of core layer
- 211: doped (and annealed) upper part of core layer
- 22: shallow part of core layer
- 221: doped (and annealed) shallow part of core layer
- M1, M2: methods
- M11-M14b: method steps
- M21-M26: method steps

## Claims

1. Method (M1) for manufacturing a photonic integrated circuit (1), the method comprising:
providing (M11) a waveguide structure including a core layer (2) having a first refractive index and a first heat conductivity, the core layer (2) arranged between a first cladding layer (3) and a second cladding layer (4), the first and second cladding layers (4) having a second refractive index lower than the first refractive index and a second heat conductivity lower than the first heat conductivity;
etching (M12) locally at least part of the second cladding layer (4) so that a region of the removed cladding layer forms a cavity (11),
implanting (M13) rare earth elements (12) into at least one of the core layer (2), the first cladding layer (1) and the second cladding layer (4) trough the cavity (11), and
annealing (M14) the at least one of rare earth doped core layer (2), the first cladding layer (3) and second cladding layer (4) with a first temperature, wherein annealing (M14) is performed by a laser beam (13) irradiated into the cavity (11).

2. Method according to claim 1, wherein etching (M12) locally the second cladding layer (4) comprises etching (M12) locally the second cladding layer (4) so that a region of the removed cladding layer forms a cavity (11), in which the core layer (2) is exposed, wherein etching (M12) in paritcular includes etching (M12) at least a portion of the core layer (2) to form a doped waveguide core of a predetermined width (14).

3. Method according to claim 1 or 2, wherein annealing (M14) comprises:
adding (M14a) an absorber layer (8) comprising an absorber material into the cavity (11),
irradiating (M14b) the absorber layer (8) by the laser beam (13) having a wavelength absorptive in the absorber layer (8) to obtain the first temperature.

4. Method according to claim 3, wherein the absorber material of the absorber layer possesses substantial absorption in the ultraviolet spectral region, wherein the laser beam (13) is a pulsed laser beam having a wavelength smaller than 300 nm, in particular about 193 nm or about 248 nm

5. Method according to any of the claims 2 to 4, wherein the absorber material comprises one of silicon and a metal.

6. Method according to any of the previous claims, wherein a core material of the core layer (2) is silicon nitride.

7. Method according to any of the previous claims, wherein a cladding material of the first and second cladding layers (4) is an oxide, in particular silicon oxide.

8. Method according to any of the previous claims, wherein the first temperature is between about 600°C and 1250°C, preferably about 1000°C.

9. Method according to any of the previous claims, further comprising:
providing the second cladding layer (4) on the doped core layer (2) within the cavity (11), preferably by applying die-to-wafer bonding,
providing a second core layer (5) having the first refractive index and the first heat conductivity on the second cladding layer (4), and
providing a third cladding layer (6) having the second refractive index and the second heat conductivity on the second core layer (5).

10. Photonic integrated circuit (1), in particular manufactured by a method according to any of the claims 1 to 9, the photonic integrated circuit (1) comprising:
a first cladding layer (3),
a first core layer (2) arranged on the first cladding layer (3),
a second cladding layer layer (4) arranged on the first core layer (2) having a first thickness (4a),
a second core layer (5) arranged on the second cladding layer (4), and
a third cladding layer (6) arranged on the second core layer (5),
wherein the first and second core layers (2, 5) are having a first refractive index and a first heat conductivity,
wherein each of the first, second and third cladding layers (3, 4, 6) have a second refractive index lower than the first refractive index and a second heat conductivity lower than the first heat conductivity,
wherein at least one of the first core layer (2), the second cladding layer (4) and the second core layer (5) is doped with rare earth elements (12),
wherein at least one of the first core layer (2) and the second core layer (5) has a predetermined width (14), wherein a ratio of the predetermined width (14) and the first thickness (4a) is determined for efficient mode coupling between the first core layer (2) or the second core layer (5).

11. Photonic integrated circuit according to claim 10, wherein the first core layer (5)is doped with the rare earth elements (12), and wherein the second core layer (2) has the predetermined width (14), wherein a second core thickness (5a) of the second core layer (5) is larger than a first core thickness (2a) of the first core layer (2).

12. Photonic integrated circuit according to claim 11, wherein the predetermined width (14) is between 0.5 µm and 2 µm and wherein an effective cross-sectional area (15) being the product of the first thickness (4a) and the predetermined width (14) is between 0.25 µm² to 1,5 µm².

13. Photonic integrated circuit according to claim 11, wherein the first core (2) has a first predetermined width (17) and the second core (5) has a second predetermined width (18) smaller than the first predetrmined with (17), wherein the second core layer (2) is arranged above the second core layer (2, 5).

14. Method (M2) for manufacturing a photonic integrated circuit (1), the method comprising:
providing (M21) a core layer (2) having a first refractive index and a first heat conductivity, the core layer (2) arranged on a first cladding layer (3) having a second refractive index lower than the first refractive index and a second heat conductivity lower than the first heat conductivity,
implanting (M22) rare earth elements (12) into at least one of the core layer (2) and the first cladding layer (3),
annealing (M23) the at least one of doped core layer (2) and doped first cladding layer (3) with a temperature between about 600°C and 1000°C, and
bonding (M24) the core layer (2) to a second cladding layer (4) having the second refractive index and the second heat conductivity, wherein the bonding of the core layer (2) to the second cladding layer (4) is performed by a die-to-wafer bonding or a wafer-to-wafer bonding.

15. Method according to claim 14, further comprising:
providing (M25) a second core layer (5) having the first refractive index and the first heat conductivity and having a predetermined width (14) arranged on the second cladding layer (4), and
providing (M26) a third cladding layer (6) arranged on the second core layer (5) having the second refractive index and the second heat conductivity.
